# EUROPEAN PATENT APPLICATION

(11) **EP 4 465 195 A1**
(43) Date of publication of application: **20.11.2024**
(21) Application number: 23173391.6
(22) Date of filing: 15.05.2023
(51) Int. Cl.: G06F 21/57, G05B 19/042, G06F 8/60

(54) **POLICY DRIVEN PROVISION AND DEPLOYMENT OF AN APPLICATION**

(71) Applicant: Siemens Aktiengesellschaft, 80333 München (DE)
(72) Inventor: Che, Kai, 80636 München (DE); Hofmann, Benedikt, 82418 Murnau (DE); Kasinathan, Prabhakaran, 81549 München (DE); Knierim, Christian, 81373 München (DE); Landeck, Yannick, 85521 Ottobrunn (DE); Munzert, Michael, 82166 Gräfelfing (DE); Shams, Saad Bin, 81549 München (DE); Wimmer, Martin, 85579 Neubiberg (DE)
(74) Representative: Siemens Patent Attorneys

(57) **Abstract**

System and Computer- implemented method for a policy driven provision and deployment of an application (15) into a runtime environment of a device (16, 17) in a plant (12), comprising:
by an application provider unit (21),
- assigning (S1) at least one attribute to the application, each attribute providing information related to the development and/or application provider of the application (15),
- publishing (S2) an application package (40) comprising the application (15) and the at least one attribute,

by an application management unit (23),
- establishing (S3) an attribute policy for the runtime environment comprising at least one attribute and assigning at least one requirement and/or restriction of a deployment parameter of the runtime environment to at least one attribute or to a group of attributes of the application (15),

at the start of the application on the runtime environment,
- evaluating (S4) the at least one attribute included in the application package against the attribute policy of the runtime environment, and
- configuring (S5) the runtime environment according to the at least one requirement and/or restriction of the deployment parameter resulting from the evaluation, and
- initiating execution (S6) of the application on the configured runtime environment.

## Description

The present invention relates to a system and a computer-implemented method for a policy driven provision and deployment of an application into a runtime environment of a device in a plant.

SW applications are increasingly installed on industrial devices to control processes in manufacturing plants, transport vehicles, or power plants. The SW applications are developed by different application providers and third-party developers. Distribution platforms similar to distribution platforms for mobile applications, which are based on operating systems like iOS and Android, are not applicable for industry grade applications as they do not provide sandboxing features like Smartphones do. Applications in an Industrial environment are often deployed on a container runtime environment which does not support isolation features per default like a Smartphone. Further, several industrial application workloads require extended privileges to gain access to underlying hardware resources or to perform diagnosis activities.

Runtime parameters which define the permission levels for industrial applications have been of vital importance in restricting the attack surface. Depending on the respective industrial domain, e.g., manufacturing, chemicals, pharma or transportation vehicles, security and safety requirements typically vary. Even within the same manufacturing plant, segments of varying security levels might exist. Hence, different industrial devices in the same plant can show high variability concerning their application workloads as well as safety and security requirements.

For instance, devices located near to the climate control system of a production process are typically subject to stricter isolation and security control compared to devices that are installed near to the air-conditioning system for an office location. Thus, runtime parameters of applications must be subject to different runtime restrictions depending on the operational purpose and the operational environment. One important aspect in this regard is the trustworthiness of the application provider and of the application as such. Industrial applications created by a certified provider, e.g., proven by certifications representing a certain quality attribute/property, may be executed with higher privileges in critical areas compared to applications from non-certified providers that run in the same location. Even, the decision whether to allow the deployment of an industrial application at all must depend on the permissions being defined by the Industrial Application publisher, their trustworthiness and on the location of the device on which the application shall be executed.

Therefore, it is an objective of the present invention to enable an automated distribution and deployment of an application depending on the different security requirements of the environment in which the applications will be executed.

The objective is solved by the features of the independent claims. The dependent claims contain further developments of the invention.

A first aspect of the invention concerns a computer-implemented method for a policy driven provision and deployment of an application into a runtime environment of a device in a plant, comprising the steps of
- assigning at least one attribute to the application, each attribute providing information related to the application provider of the application,
- publishing an application package comprising the application and the at least one attribute, both preceding steps performed by an application provider unit,
   by an application management unit of the runtime environment
- establishing an attribute policy for the runtime environment comprising at least one attribute and assigning at least one requirement and/or restriction of a deployment parameter of the runtime environment to at least one attribute or to a group of attributes of the application,
   at the start of the application on the runtime environment,
- evaluating the at least one attribute included in the application package against the attribute policy of the runtime environment, and
- configuring the runtime environment according to the at least one requirement and/or restriction of the deployment parameter resulting from the evaluation, and
- initiating execution of the application on the configured runtime environment.

The attributes assigned to the application can be checked against the attribute policy which is created by the application management unit of the runtime environment which is under control of the plant operator. Attributes can concern characteristics of the application program, like security features included in the SW code, but also certifications of the programmer of the application testifying knowledge on security programming, and many more. The attribute policy reflecting the security requirements of the runtime environment of the device. The attribute policy of the runtime environment may depend on the physical location of the runtime environment / device in the plant, or it depends on further applications executed in parallel on the runtime environment and furthermore. Thus, the method supports the enforcement of fine-grained access control for applications by offering a way to control which applications can access which resources on which device under which conditions. From an operational perspective, the attribute policy implies low operational costs and management overhead.

In a preferred embodiment the attribute is structured as a verifiable credential according to a specification of the Worldwide Web Consortium W3C or as a digital certificate according to ITU specification X.509 and is issued by a trusted unit.

Verifiable credentials are structured according to W3C Recommendation "Verifiable Credentials Data Model v1.1", issued 03 March 2022. The verifiable credential can represent all of the same information that a physical credential represents. The W3C recommendation provides information on the exchange of the credentials between an issuer, a holder and a verifier of the verifiable credential. Similarly, the digital certificate according to the ITU (International Telecommunication Union) specification X.509 provides a data structure and security features to certify the included information. Structuring and using the attribute according to these recommendation and specification provides reliable and provable means to make the proving of attributes cryptographically verifiable.

In a preferred embodiment the attribute further comprises a link to a wallet unit which provides a proof for the verifiable credential.

This enables the use of selective disclosure to make the verification process privacy preserving.

In a preferred embodiment, the proof of the attribute is requested at the wallet unit during evaluation of the attribute policy.

Thereby, recent changes in the status of the attribute, e.g., a revocation of the verifiable credential can be recognized, and actions can be adapted respectively.

In a preferred embodiment the application package comprises a deployment configuration specifying the configuration parameters of the application to be executed.

With the deployment configuration the application package provides all configuration parameters, e.g., privileges, required to configure and execute the application on the runtime environment, especially if the application is implemented on a container runtime environment. As the application package also includes the attributes, the requirements and restrictions of the configuration parameters resulting from the evaluation of the attribute policy can be implemented efficiently.

In a preferred embodiment, if the evaluation of the attributes violates the attribute policy, the violation is ignored/overwritten and the application is executed, or the application is executed with a restricted deployment configuration or the application is not executed.

One of the actions is assigned to one or a group of attributes and is included in the attribute policy. This provides high flexibility of reaction alternatives to different attributes and attribute policies.

In a preferred embodiment the application package is cryptographically signed by the application provider unit.

This ensures integrity and prove of origin to the application package and therefore secures the publishing and distribution process of the application.

In a preferred embodiment the attribute policy is defined using a policy language, preferably policy language Rego, and the evaluation of the at least one attribute and configuration of the runtime environment according to the attribute policy is performed by an open policy agent at the resulting runtime.

This ensures flexible generation of the attribute policy. The use of the open policy agent reduces the coding effort for enforcement of the policy without.

In a preferred embodiment the attribute policy is configured complying to a safety and security level.

Especially, the attribute policy is configured complying to a safety and security levels of the plant.

This allows a simple assignment of the attribute policy to devices according to the safety and security policy of the device.

In a preferred embodiment different attribute policies are structured in hierarchical levels wherein each hierarchical level is assigned to various safety and security levels.

This provides a clear and transparent attribute policy structure optimizing correct configuration of the various attribute policies.

In a preferred embodiment groups of devices of the plant are structured in hierarchical levels according to the safety and security levels, wherein each group of devices corresponds to a level of the attribute policy level.

This facilitates correct assignment of the attribute policy of a specific safety and security level to the devices located in the security zones of the same safety and security level. A group of devices comprises one or more devices.

A second aspect of the invention concerns a system for a policy driven provision and deployment of an application into a runtime environment of a device in a plant, comprising an application provider unit configured to
- assign at least one attribute to the application, each attribute providing information related to the application provider, and
- publishing an application package comprising the application and the at least one attribute,
   an application management unit configured to,
- establish an attribute policy for the runtime environment comprising at least one attribute and assigning at least one requirement and/or restriction of a configuration parameter of the runtime environment to at least one attribute or to a group of attributes of the application,
   at the start of the application at the runtime environment,
- evaluate the at least one attribute included in the application package against the attribute policy of the runtime environment,
- configure the runtime environment according to the at least one requirement and/or restriction of the configuration parameter resulting from the evaluation, and
- initiate execution of the application on the configured runtime environment.

This provides a distribution platform enabling a check and implementation of applications from different application providers into industrial and even critical infrastructure plants taking into account the various security requirements of the runtime environment of the devices. enforcing different runtime restrictions depending on application providers 'attributes (such as security certifications) to control application executions through varying protection measures such as the use of isolation/encapsulation techniques representing different levels of permissions.

In a preferred embodiment the application management unit comprises a plant administration interface configured to
- establish the attribute policy for the runtime environment comprising at least one attribute and assign the at least one requirement and/or restriction of the deployment parameter of the runtime environment to the at least one attribute or to the group of attributes of the application, and
   a device operator interface configured to
- evaluate the at least one attribute included in the application package against the attribute policy of the runtime environment,
- configure the runtime environment according to the at least one requirement and/or restriction of the deployment parameter resulting from the evaluation, and
- initiate execution of the application on the configured runtime environment.

The implementation of the administration interface and the device operator interface and the respecting assignment of the functionality allows provision of different access rights according to different roles of the person using or controlling the interface.

In a preferred embodiment the device operator interface is implemented as an integral part of the application administration unit, or the device operator interface is implemented at the device on which the runtime environment is located.

This allows a flexible architecture to deploy the application especially using container virtualization on a container runtime environment on the device. In an orchestrated container environment, the device operator interface comprises an orchestrator function, e.g., Kubernetes, and is preferably implemented as integral part of the centrally located administration management unit. Wherein in a non-orchestrated container environment, the device operator interface is located on the device hosting the runtime environment.

A third aspect concerns a computer program product directly loadable into the internal memory of at least on one digital computer, comprising software code portions for performing the steps of the method when said product is run on said at least one digital computer.

Unless indicated otherwise in the description below, the terms "establish", "publish", "evaluate", "configure", "initiate" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controller modules (PLCs), handheld computer systems, mobile radios and other communication devices that can process data in computer-aided fashion, as well as processors and other electronic devices for data processing.

The invention will be explained in more detail by reference to the accompanying figures.
- Fig. 1: schematically shows an exemplary embodiment of the inventive system in an industrial application ecosystem.
- Fig. 2: illustrates an exemplary embodiment of the inventive method as flow chart.
- Fig. 3: shows an exemplary information flow diagram for requesting a verifiable credential used as attribute assigned to an application.
- Fig. 4: illustrates an exemplary embodiment of an attribute structured according to such verifiable credential.
- Fig. 5: schematically shows an exemplary embodiment of an application package.

- Fig. 6: illustrates an exemplary embodiment of secure distribution steps of the inventive method.
- Fig. 7: illustrates an exemplary embodiment of the deployment steps of the inventive method.
- Fig.8: shows an exemplary embodiment of a hierarchical structure of groups of devices of a plant corresponding to a level of the attribute policy level.

Equivalent parts in the different figures are labeled with the same reference signs.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional units could also be implemented by an indirect connection or coupling, e.g., via one or more intermediate elements. It is further noted that each functional unit described for a system can perform a functional step of the related method. In the same way, each functional step described for a method can be performed in a functional unit of the related system.

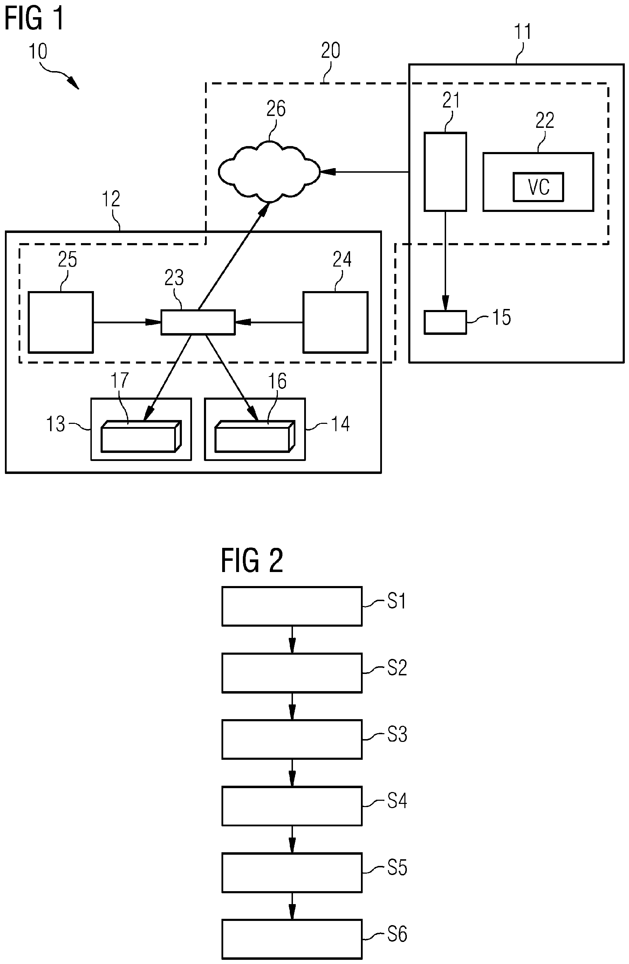

Fig. 1 shows an industrial environment 10 comprising an application provider domain 11 and an application implementation domain, i.e., a plant 12. Throughout this document industrial facility, facility and plant are used as synonymous expressions. Employees of the facility can have different roles such as device operator and facility administrator.

In the application provider domain 11 an application provider is creating an application 15 and employs developers. In the context of supporting self-sovereign identity, the application provider has a wallet for verifiable credentials. The application implementation domain 12 is structured into zones 13, 14 of different security level. Applications are preferably deployed by container virtualization on a container supporting runtime environment of the device 17, 18.

In said industrial environment 10 system 20 is installed to provide and deploy the application 15 in a policy driven way into a runtime environment of the device 16, 17 in the plant 12. System 20 comprises an application provider unit 21 which is communicatively connected to a wallet unit 22 and is located in the application provider domain 11. The application provider unit 21 is configured to assign at least one attribute to the application. Each attribute provides information related to the application provider. The application provider unit 21 is configured to publish an application package comprising the application 15 and the at least one attribute. The system 20 preferably comprises an application distribution unit 26 configured to publish the application package.

Further the system 20 comprises an application management unit 23 located in the plant 12. In an embodiment the application management unit 23 comprises a plant administration interface 24 and a device operator interface 25. Via the plant administration interface 24 the plant administrator can provide input for establishing the attribute policy. The device operator interface 25 is configured to input and output information concerning the deployment of the application from/to the device operator. The device operator interface 25 is implemented as an integral part of the application administration unit 23 and implemented centrally in the plant 12, or the device operator interface is implemented at the device 17, 18 on which the runtime environment is located and the application 15 shall be executed.

An overview of the method steps to provide and deploy an application into a runtime environment of a device are illustrated in Fig. 2 referring to the system 20, as an example, which is configured to perform the steps.

In step S1, at least one attribute is assigned to the application by the application provider unit. Each attribute provides information related to the application provider of the application. Information related to the application provider include information on the qualification of employees of the application provider which develop the application, certificates issued to the application in total from a certification organization but also information on security features implemented in the application or security standards the application is conforming to. The attribute is provable and issued by a trusted unit.

Next in step S2, the application is published as a part of an application package comprising the application and the at least one attribute. The application package is published preferably on the application distribution unit 26. The application package is uploaded to the application distribution unit 26 by the application provider unit 21 and downloaded to the application management unit 23.

In step S3, an attribute policy is established for a runtime environment of a device by assigning at least one requirement and/or restriction of a deployment parameter of the runtime environment to at least one attribute or to a group of attributes of the application. Preferably the attribute policy provides rules based on the attributes of the application concerning safety and security features, e.g., required to fulfill requirements of a safety and security level. The attribute policy could provide requirements and/or restrictions of deployment parameters of the runtime environment to fulfill configuration requirements concerning the task the device shall be used for or concerning country specific requirements.

Step 3 can be executed after step 1 and step 2 as described, but also before step 1 and step 2.

At the start of the application on the runtime environment, the at least one attribute included in the application package is evaluated against the attribute policy of the runtime environment, see S4. The runtime environment is configured according to the at least one requirement and/or restriction of the deployment parameter resulting from the evaluation, see step S5 and execution of the application is initiated on the configured runtime environment, see step S6.

Thus, system 20 is implemented to enforces different runtime restrictions depending on application providers attributes to control the execution of the application through varying protection measures such as the use of isolation/encapsulation techniques representing different levels of permissions, i.e., privileges. This supports the enforcement of fine-grained access control for applications by offering a way to control which applications can access which resources on which edge device under which conditions. From an operational perspective, this can be achieved through the definition and enforcement of security policies - implying low operational costs.

The different steps of the method are now described in more detail.

First, an application provider needs to gather attributes, i.e., information, certifications about the application itself, the application provider's company, competencies, and qualification of the application developers and furthermore. These attributes need to be asserted from certification-bodies that are trusted by plant administrators in an eco-system of industrial applications. These assertions about the attributes need to be verifiable. To comply to this, the attribute is preferably structured as a verifiable credential according to a specification of the Worldwide Web Consortium W3C and/or as a digital certificate according to ITU specification X.509. This enables proving of attributes cryptographically verifiable. Verifiable credentials additionally enable the use of selective disclosure to make the verification process privacy preserving.

Verifiable credentials (VC) are an open standard for digital credentials which is currently standardized in World Wide Web Consortium (W3C). A data model for verifiable credentials is "Verifiable Credentials Data Model v1.1", published March 03, 2022. Verifiable credentials are increasingly applied in many different use cases, especially industrial use cases. An entity that generates the credential is called the issuer. The credential is then given to a holder who stores it for later use. The holder can then prove something about themselves or the subject the credential is issued for by presenting their credentials to a verifier. Various architectures and protocols are specified for carrying verifiable credentials from the issuer to the holder, and the holder to the verifier.

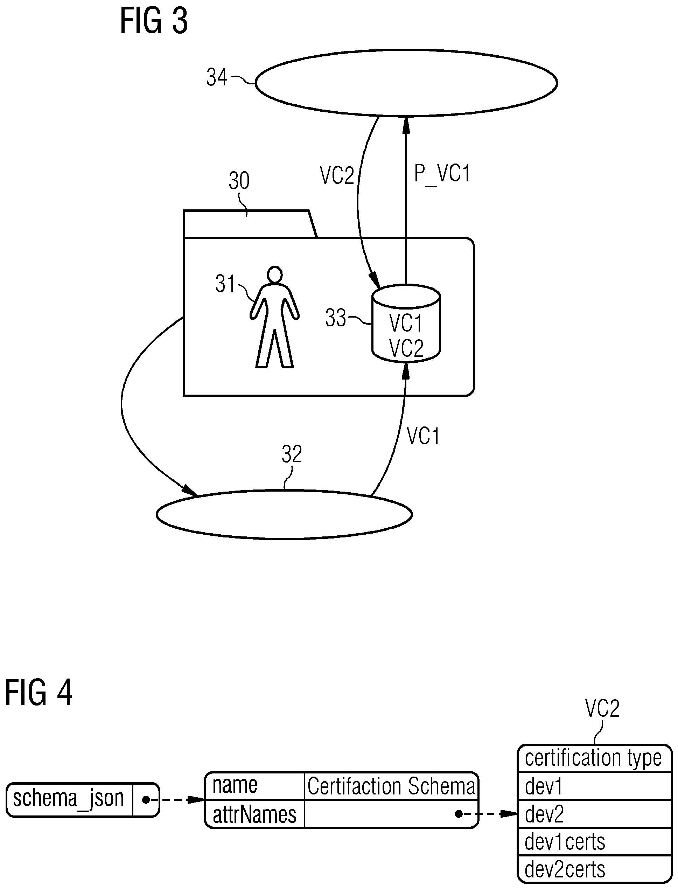

Fig. 3 illustrates the involved stakeholders in the application provider domain when verifiable credentials are used to attach attributes to an application.
In a first step developers 31 of an application provider 30 have educated themselves and have received Certification VC1. For instance, they could acquire a Secure Coding Certification. As a proof they have received a paper with a signature, a digital certificate, or a verifiable credential. The form of the proof does is irrelevant and does not influence the invention. Here, the developers 31 received a verifiable credentials VC1 from a certifier 32 and stored them in a wallet unit 33 of the app provider 30.

Then the application provider 30 tasks these developers 31 to develop an application. The application provider 30 intends to acquire the Secure Microservice Certification for this application and approaches a certifier 34. To issue the requested certificate, the certifier 34 requires the employees of the application provider to have certain certifications. For this the app provider 30 can present proofs P_VC1 about the verifiable credentials VC1 of its employees 31. The Secure Microservice Certification is issued by providing verifiable credential VC2.

A simplified schema of the verifiable credential VC2 issued by certifier 34 is illustrated in Figure 4. It comprises information on the certification type, the certified developers dev1, dev2 and information on their certifications dev1certs, dev2certs. After the certification, the verifiable credential VC2 in the application provider's wallet unit 33 comprises the values of the respective developers.

The consumers of the application, e.g., plant administrator, can request a proof from the app provider, such that the minimum amount of personal data is disclosed. For instance, a proof could request the number of holders of certificates and keep the names of the holders private.

To attain an attribute structured as a digital certificate, the application provider requests certification at a certification institute. A certification process is preformed, and the digital certificate is issued and signed by Certificate authority.

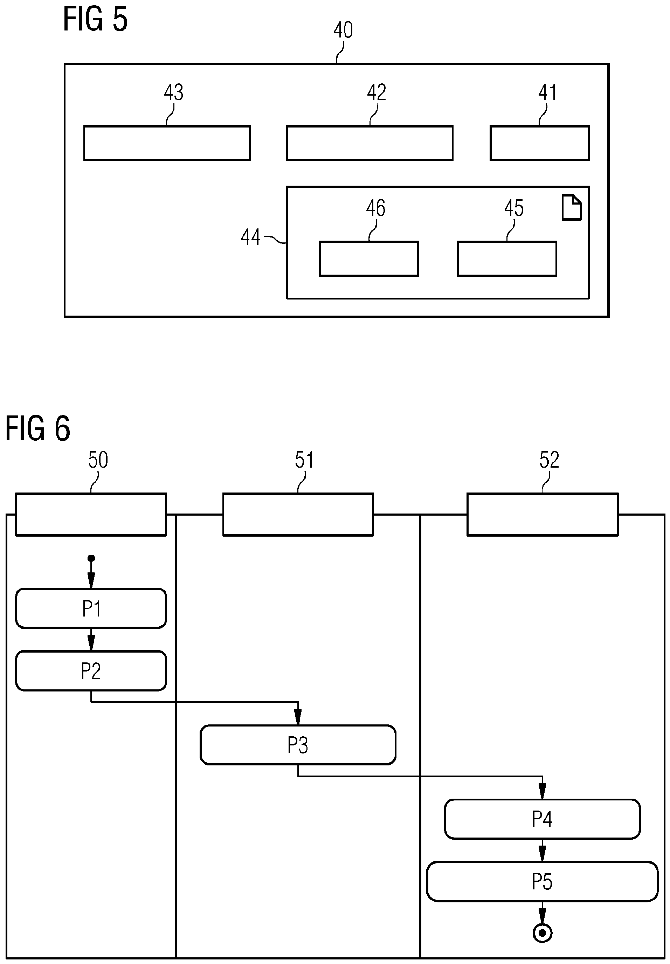

Fig. 5 shows an application 41 which is packaged together with all necessary information into an application package 40. The application package 40 comprises the application 41, deployment configuration 42, attributes 44, and preferably a signature 43 of the application provider. The application 41 comprises software artefacts, which are executable, e.g., one or several container images in the case the application is deployed via SW container. It further comprises a deployment configuration 42 specifying the configuration parameters of the application used to start and execute the application 41 on the runtime environment. The deployment configuration 42 includes information about the required privileges that the application 41 requires. This could be a docker-compose file.

The attribute 44 comprises of at least one digital certificate and/or at least one invitation link which identifies and leads to the application provider's wallet unit comprising attributes verifiable credential. For instance, the invitation link is structured as described in Aries RFC 0434: Out- of-Band Protocol 1.1.

An embodiment of a secure application publishing process performed by an application provider unit 50, an application distribution unit 51 and an application management unit 52 is illustrated in Fig. 6.

An application provider starts the process via an application provider unit 50 by creating an application package P1 containing the application, the deployment configuration, and the attributes. The application package is uploaded to the application distribution unit 51, see P2. In an embodiment a message carrying the application package to the application distribution unit 51 is cryptographically signed by the application provider unit to verify the integrity of the content. The application distribution unit 51 verifies this signature to verify the integrity of the message, see P3. The application package is downloaded by the app management unit 52, see P4. The app management unit 52 verifies the signature and thereby the integrity of the application package, see P5. The application management unit 52 trusts the application distribution unit 51 and consequently receives a public key of the application provider for the application package verification from the application distribution unit 52. Thus, an invitation link inside the application package is trusted and is used to reach out to a wallet unit of the application provider.

The published applications are accessible through the application distribution unit 52 can be installed onto devices of a plant. The application distribution unit 52 complies to an "App Store" in a mobile device eco-system. The application is deployed onto devices in the plant by the application management unit 52. The application management unit 52 pulls the application package from the application distribution unit 51 and then deploys it onto the devices of the plant. The application management unit 52 also performs the attribute policy evaluation before deploying the application. Importantly, the evaluation of the attribute policies can also happen on the edge devices. They must be evaluated at least once.

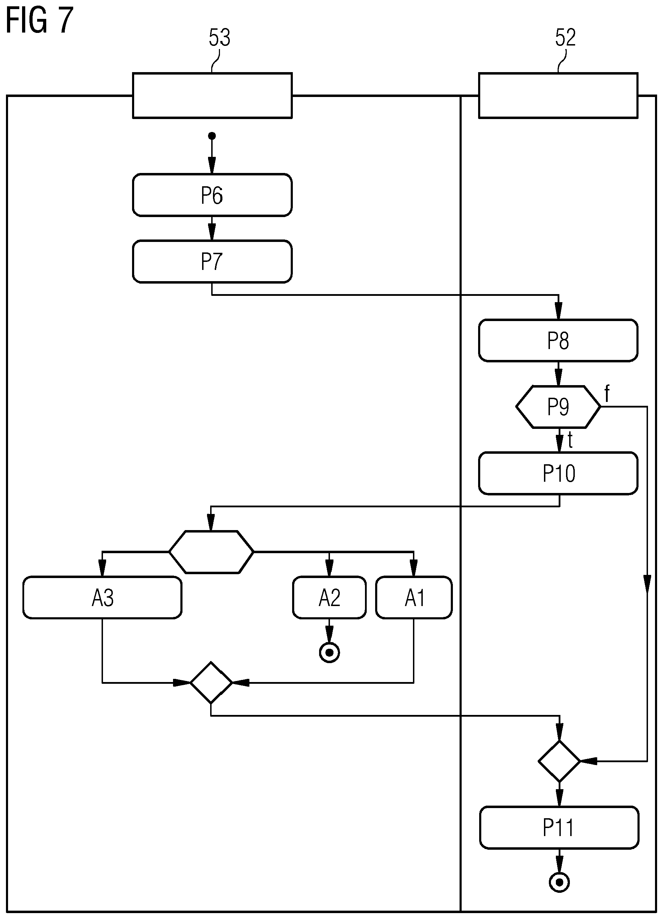

Fig. 7 shows in detail the steps necessary to deploy an application on the device of the plant.

A facility administrator configures via a facility administrator interface of the application management unit 52 attribute policies for different devices of the plant, see P6. The application is deployed onto a specific edge device via a device operator interface, see P7. In Fig.7 the facility administrator interface and the device operator interface are shown as a combined single operator interface 53.The application management unit 52 validates the attribute policy with respect to the attributes provided in the application package for the application, see P8. If needed the application management unit 52 requests the necessary proofs for the verifiable credentials if the attribute policy calls for it.

The process leads to a decision, see P9, whether the deployment configuration violates the attribute policy driven runtime restrictions or not. If a violation has been detected, see arrow t, several alternative actions are prompted, see P10 via the operator interface 53. For instance, the alternatives are either to override and still deploy, see A1, or to deploy with restricted deployment configuration, see A3 or to do not run the application, see A2. If no violation has been detected, see arrow f, or the alternative A1 or A3 are selected the application is started, see P11.

The attribute policy assigns at least one requirement and/or restriction of a deployment parameter of the runtime environment to at least one attribute or to a group of attributes of the application. These configuration parameters result in runtime restrictions that are applied to the application. For instance, if an application is fulfilling an attribute policy with its attributes it may be granted certain privileges. If an application is not fulfilling a certain attribute policy, it may be denied certain privileges. The enforcement and resulting runtime policies are implemented using a policy language Rego and the open policy agent. The attribute policy is defined using a policy language, and the evaluation of the at least one attribute and the configuration of the runtime environment according to the attribute policy is performed by an open policy agent.

In an embodiment the attribute policy is configured complying to a safety and security level. Different attribute policies are structured in hierarchical levels wherein each hierarchical level is assigned to a safety and security level, preferably different safety and security levels. Groups of devices of the plant are structured in hierarchical levels according to the safety and security levels, wherein each group of devices corresponds to a level of the attribute policy level.

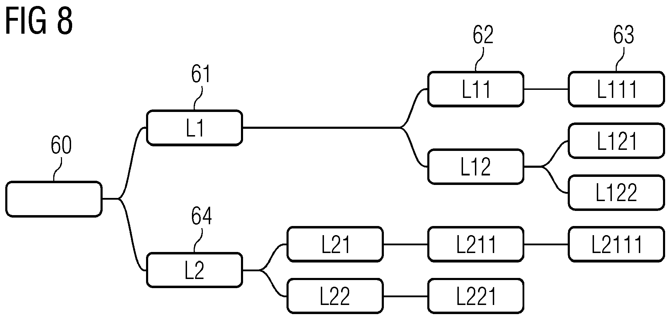

An example plant environment is illustrated in Fig. 8. A plat 60 has multiple areas 61, 62, 63, 64,... with various levels of security and safety requirements L1,..., L221. To apply these requirements to the various devices, the devices are grouped into groups according to the area they are located in. Attribute policies established to fulfill the different safety and security levels L1,..., L221 are assigned either on level of a single device, or on level of groups of devices or on level of groups L1, L2 of groups of devices. The deeper in the tree the policy is assigned to the more priority it has. Each attribute policy complies to a certain safety and security level.

As an example:
A power plant has 2 buildings. The nuclear reactor building and the office building. A facility administrator defines the attribute policies, by the application management unit and decides to group the devices in a tree structure.

The following attribute policies are defined:
Power Plant policy: no general attribute policy is specified.
1. nuclear reactor building policy:
   a. Run only if ISO 27001 certified by TUV.
   b. Network access only if the app has the Secure Microservice certification.
2. cooling room 1 policy:
   a. Cooling control access only if at least 2 Secure Coding certified developer are working at the app provider.
   b. Network access only if at least 2 developers have the Secure Coding certification until 2024 in the Secure Microservice certification.
3. cooling edge: no policy specified
4. office building policy:
   a. Run only if ISO 27001 certified.
5. floor1 and room1 do not specify additional policies.
6. climate edge:
   a. Climate control access only if ISO 27001 certified by TUV.

Now a device operator deploys via the application management unit the SensitiveCoolingApp onto the cooling edge in cooling room 1. The app management evaluates the path in the attribute policy tree. After combining all policies, the following policy applies to the SensitiveCoolingApp:
1. Run only if ISO27001 certified by TUV.
2. Cooling Control access only if at least 2 SecureCoding certified developers are working at the app provider.
3. Network access only if at least 2 developers have the Secure Coding certification until 2024 in the Secure Microservice certification.

Importantly, for the attribute policies on the SecureCoding certified developers the app management must request a proof from the app provider which will present the requested proof. The app management can use the invitation link to start communicating with the app provider's wallet to request and verify the proofs. The ISO 27001 certificate can be checked for its contents without interaction with TUV. The app management, app distribution, or edge device can make sure to get information on revoked certificate. Revocation of the verifiable credentials is already accounted for because the prover must present a proof that their verifiable credential has not been revoked.

Similarly, the device operator can deploy the SensitiveCoolingApp onto the climate edge without any issue. However, if the device operator accidentally deploys the CoolingApp from another app provider which is not ISO certified and has no Secure Coding certified developers. Then the application management unit will prompt them for action as the policies are violated. The device operator is lacking the rights to override the application management unit and must ask his supervisor, e.g., the facility administrator for approval.

The described method and system support role-based access control to facilitate more fine-grained roles than facility admin and device operator. The method and system enable an Owner or plant operator of devices to govern capabilities when it comes to which applications run where in their environment under which condition. Manual interventions are kept to a minimum because the attribute policy is set up only once and then is enforced automatically without intervention.

It is now harder to deploy the wrong application in the wrong environment by accident. In addition, it provides an incentive for app providers to gather proof of the security of their products. With respect to flexibility the method enables to assign hard restrictions to unknown, uncertified applications and few restrictions can be applied to known, certified applications.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for a policy driven provision and deployment of an application (15) into a runtime environment of a device (16, 17) in a plant (12), comprising
by an application provider unit (21),
- assigning (S1) at least one attribute to the application, each attribute providing information related to the development and/or application provider of the application (15),
- publishing (S2) an application package (40) comprising the application (15) and the at least one attribute,
by an application management unit (23),
- establishing (S3) an attribute policy for the runtime environment comprising at least one attribute and assigning at least one requirement and/or restriction of a deployment parameter of the runtime environment to at least one attribute or to a group of attributes of the application (15),
at the start of the application on the runtime environment,
- evaluating (S4) the at least one attribute included in the application package against the attribute policy of the runtime environment, and
- configuring (S5) the runtime environment according to the at least one requirement and/or restriction of the deployment parameter resulting from the evaluation, and
- initiating execution (S6) of the application on the configured runtime environment.

2. Computer-implemented method according to claim 1, wherein the attribute is structured as a verifiable credential (VC) according to a specification of the Worldwide Web Consortium W3C and/or as a digital certificate according to ITU specification X.509 and is issued by a trusted unit.

3. Computer-implemented method according to any of the preceding claims, wherein the application package (40) is published on an application distribution unit (26).

4. Computer-implemented method according to any of the preceding claims, wherein the attribute further comprises a link to a wallet unit (22) which provides a proof for the verifiable credential wherein during evaluation of the attribute policy, the proof of the attribute is requested at the wallet unit (22).

5. Computer-implemented method according to any of the preceding claims, wherein the application package (40) comprises a deployment configuration (42) specifying the configuration parameters of the application (41) to be executed.

6. Computer-implemented method according to claim 5, wherein if the evaluation of the attributes violates the attribute policy: the violation is ignored and the application is executed, or the application is executed with a restricted deployment configuration or the application is not executed.

7. Computer-implemented method according to any of the preceding claims, wherein the application package (40) is cryptographically signed by the application provider unit (21).

8. Computer-implemented method according to any of the preceding claims, wherein the attribute policy is defined using a policy language, and the evaluation of the at least one attribute and the configuration of the runtime environment according to the attribute policy is performed by an open policy agent.

9. Computer-implemented method according to any of the preceding claims, wherein the attribute policy is configured complying to a safety and security level.

10. Computer-implemented method according to claim 9, wherein different attribute policies are structured in hierarchical levels wherein each hierarchical level is assigned to a safety and security level.

11. Computer-implemented method according to claim 9 and 10, wherein groups of devices of the plant are structured in hierarchical levels according to the safety and security levels, wherein each group of devices corresponds to a level of the attribute policy level.

12. System for a policy driven provision and deployment of an application into a runtime environment of a device (16, 17) in a plant (12), comprising
an application provider unit (21) configured to,
- assign at least one attribute to the application, each attribute providing information related to the application provider, and
- publishing an application package comprising the application and the at least one attribute,
an application management unit (23) configured to,
- establish an attribute policy for the runtime environment comprising at least one attribute and assigning at least one requirement and/or restriction of a configuration parameter of the runtime environment to at least one attribute or to a group of attributes of the application,
at the start of the application at the runtime environment,
- evaluate the at least one attribute included in the application package against the attribute policy of the runtime environment,
- configure the runtime environment according to the at least one requirement and/or restriction of the configuration parameter resulting from the evaluation, and
- initiate execution of the application on the configured runtime environment.

13. System according to claim 12, wherein the application management unit (23) comprises
a plant administration interface (24) configured to
- establish the attribute policy for the runtime environment comprising at least one attribute and assign the at least one requirement and/or restriction of the deployment parameter of the runtime environment to the at least one attribute or to the group of attributes of the application, and
a device operator interface (25) configured to
- evaluate the at least one attribute included in the application package against the attribute policy of the runtime environment,
- configure the runtime environment according to the at least one requirement and/or restriction of the deployment parameter resulting from the evaluation, and
- initiate execution of the application on the configured runtime environment.

14. System according to claim 13, wherein the device operator interface (25) is implemented as an integral part of the application administration unit (23), or the device operator interface (25) is implemented at the device (16, 17) on which the runtime environment is located.

15. A computer program product directly loadable into the internal memory of at least one digital computer, comprising software code portions for performing the steps of claims 1 - 11 when said product is run on said at least one digital computer.
